Europäisches Patentamt

European Patent Office

Office européen des brevets

(11) Numéro de publication : **0 008 963**
**B1**

(12) **FASCICULE DE BREVET EUROPÉEN**

(45) Date de publication du fascicule du brevet :
30.09.81

(51) Int. Cl.³ : **B 23 D 35/00**

(21) Numéro de dépôt : 79400507.4

(22) Date de dépôt : 18.07.79

(54) **Cisaille guillotine.**

(30) Priorité : 04.08.78 FR 7823073

(43) Date de publication de la demande :
19.03.80 (Bulletin 80/06)

(45) Mention de la délivrance du brevet :
30.09.81 Bulletin 81/39

(84) Etats contractants désignés :
**AT BE CH DE GB IT NL SE**

(56) Documents cités :
**DE - B - 1 201 657**
**FR - A - 2 336 206**
**US - A - 2 549 560**
**US - A - 3 756 110**

(73) Titulaire : **PROMECAM SISSON-LEHMANN**
**63, rue de Strasbourg**
**F-93206 Saint-Denis (FR)**

(72) Inventeur : **Cros, Pierre Georges**
**92, Rue Tahere**
**F-92000 Saint-Cloud (FR)**

(74) Mandataire : **Tony-Durand, Serge**
**Cabinet Tony-Durand 22, Boulevard Voltaire**
**F-75011 Paris (FR)**

Imprimerie Jouve, 17, rue du Louvre, 75001 Paris, France

EP 0 008 963 B1

## Cisaille guillotine

La présente invention a pour objet une cisaille guillotine destinée à la coupe des métaux en feuilles.

Ces cisailles guillotines se composent d'un bâti constitué par deux montants et un tablier fixe, et d'un tablier mobile guidé sur le bâti.

Le tablier fixe est constitué d'un sommier supportant la lame fixe et d'une table formant équerre avec le sommier. Le tablier mobile est guidé dans un plan vertical ou légèrement incliné et supporte la lame mobile.

Les dispositifs de guidage sont généralement situés sur le tablier mobile et sur des prolongements latéraux inférieurs de celui-ci, comme dans le cas du brevet français n° 2 336 206. En outre, la force de coupe est communiquée au tablier mobile par un dispositif mécanique ou hydraulique, situé au-dessus ou au-dessous de ce tablier mobile, et agissant, soit directement, soit par l'intermédiaire de bielles exerçant une poussée ou une traction sur ce tablier.

On sait que l'effort de cisaillage d'une tôle s'accompagne d'un couple absorbé par les serre-tôles, et qui se traduit par une force horizontale transversale relativement importante. Le tablier mobile doit donc résister à cette force par l'intermédiaire de ses organes de guidage.

Par construction, ceux-ci sont généralement situés au-dessus du plan de coupe et au niveau de ce plan, comme par exemple dans le brevet français n° 2 336 206 précité.

Or, dans nombre de réalisations connues, le tablier mobile est généralement très long par rapport à sa hauteur. Il agit comme une poutre supportant une charge et sa hauteur est déterminée par un calcul de résistance des matériaux. En conséquence, dans ces réalisations, les dispositifs de guidage sont courts et donc très sollicités. Ils sont sujets à une usure rapide qui augmente le jeu entre les lames, et provoque des bavures de coupe.

Enfin, les cisailles connues qui sont destinées à couper de la tôle fine, doivent être équipées d'un dispositif de maintien des tôles situé à l'arrière du plan vertical des lames. En effet, on sait que les tôles fines de grande dimension fléchissent par leur propre poids. Lorsqu'on veut cisailler la tôle qui pénètre largement derrière les lames, elle fléchit et échappe à la butée arrière prévue dans le plan horizontal de travail. Il faut donc supporter cette tôle à l'arrière du plan de coupe, et faire en sorte que ce support s'escamote pendant la coupe, afin que la tôle puisse se débattre librement et être évacuée.

Ce dispositif de maintien qui doit s'effacer au moment de la coupe, est actionné par une source d'énergie indépendante de la machine.

Les systèmes généralement utilisés jusqu'à présent sont soit des supports magnétiques qui maintiennent la tôle par-dessus, soit des supports inférieurs indépendants de la cisaille, actionnés par une source d'énergie annexe tel que l'air comprimé ou un fluide hydraulique.

L'invention a pour but de remédier à ces inconvénients en réalisant une cisaille permettant notamment d'exécuter la coupe des tôles en éliminant les bavures précitées.

A cet effet, conformément à l'invention, des dispositifs de guidage sont placés à partir et au-dessous du niveau du plan horizontal de coupe, les prolongements précités étant agencés pour recevoir et transmettre la force motrice de coupe développée par des vérins fixés sur le tablier fixe.

Le fait d'agencer des dispositifs de guidage dont les rampes ont une longueur totale importante par rapport à la hauteur du tablier mobile, dont certains sont en outre placés au niveau du plan de coupe, diminue considérablement l'usure des organes de guidage, et supprime par ailleurs les déformations élastiques nuisibles de la structure du tablier mobile, ce qui élimine pratiquement toute bavure de coupe sur la tôle.

Plus précisément, l'invention prévoit que la longueur totale des rampes de guidage des dispositifs précités est supérieure à la hauteur du tablier mobile, alors que le guidage de celui-ci s'effectue sur une longueur nettement inférieure dans les cisailles connues.

Suivant une autre particularité de l'invention, les galets des dispositifs de guidage situés au niveau du plan horizontal de coupe sont réglables, afin d'ajuster le jeu entre les lames de coupe en fonction de l'épaisseur à couper.

Certains des galets situés au niveau du plan horizontal de coupe, sont ainsi montés sur les faces arrière des prolongements latéraux, librement rotatifs sur des excentriques portés par des tourillons disposés dans les alésages des montants, ces galets prenant appui contre des rampes agencées sur les faces arrière des prolongements latéraux du tablier mobile.

Suivant une caractéristique importante de l'invention, la cisaille guillotine est équipée d'un dispositif de maintien des tôles fines et de grande dimension, placé à l'arrière du plan de coupe derrière les prolongements latéraux inférieurs du tablier mobile et supporté par ceux-ci ; ce dispositif de maintien est réalisé de façon à s'abaisser en synchronisme avec le tablier mobile pour supporter la tôle pendant sa coupe, puis à s'escamoter au moment de la remontée du tablier mobile afin de permettre l'évacuation de la tôle, tandis que des moyens sont prévus pour commander automatiquement ce système de maintien exclusivement par les vérins d'entraînement du tablier mobile, sans apport d'énergie extérieure.

Ainsi, le dispositif de maintien des tôles fines présente l'avantage de supporter la tôle en cours de coupe pendant la descente du tablier mobile, la mise en œuvre de ce dispositif de maintien pouvant en outre être assurée sans utilisation d'une source d'énergie extérieure, grâce au fait notamment qu'il est monté sur les prolongements ou extensions latérales du tablier mobile.

Suivant une autre particularité de l'invention, les prolongements latéraux sont munis de parties terminales recourbées vers le haut en forme de crosses, sur lesquelles les vérins de travail exercent leur poussée vers le bas, afin d'entraîner le tablier mobile vers le bas.

D'autres particularités et avantages de l'invention apparaîtront au cours de la description qui va suivre. Aux dessins annexés donnés à titre d'exemple non limitatif, on a représenté un mode de réalisation de la cisaille selon l'invention.

La figure 1 est une vue mi-élévation latérale, mi-coupe suivant I-I de la figure 2 de la cisaille guillotine conforme à l'invention.

La figure 2 est une vue en élévation de face de la cisaille de la figure 1.

La figure 3 est une vue mi-coupe mi-élévation à grande échelle des dispositifs de guidage du tablier mobile.

La figure 4 est une vue en élévation latérale à grande échelle du dispositif de maintien des tôles fines de grande dimension, représenté en position haute.

La figure 5 est une vue mi-coupe mi-élévation à échelle agrandie d'un vérin amortisseur coopérant avec le dispositif de maintien des tôles fines pour immobiliser celui-ci en position basse pendant l'évacuation des tôles.

La figure 6A est une vue en élévation schématique du dispositif de maintien des tôles fines en position haute. La figure 6B est une vue schématique analogue représentant le dispositif de maintien des tôles fines en position basse, lorsque le tablier mobile est à son point mort bas.

Les figures 6C et 6D sont des vues schématiques analogues aux figures 6A et 6B, représentant les deux positions possibles du dispositif de maintien des tôles fines corrélativement aux deux modes d'évacuation possibles de celles-ci vers l'arrière et vers l'avant de la cisaille.

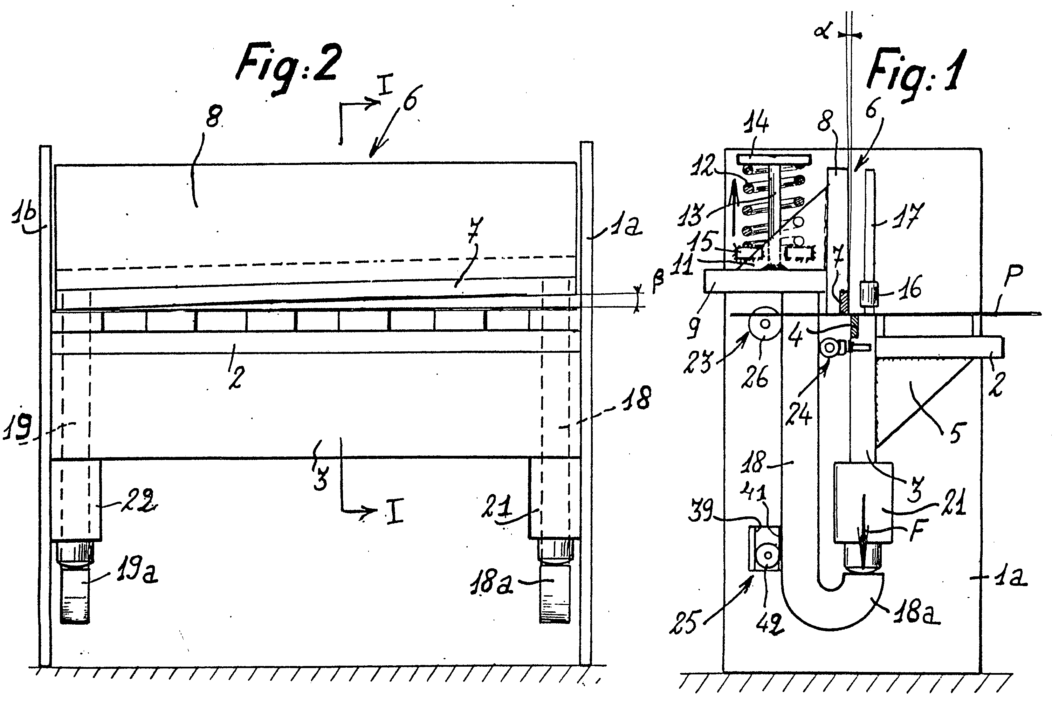

La cisaille guillotine représentée aux figures 1 et 2 comporte deux montants latéraux verticaux 1a et 1b, solidaires d'une table fixe 2 et d'un tablier 3 supportant une lame fixe 4, ces deux dernières pièces constituant une équerre entrecroisée par des goussets 5.

La cisaille comprend également un tablier supérieur mobile 6 pourvu d'une lame de coupe 7 encastrée à la partie inférieure d'une plaque verticale 8 solidaire d'une plaque horizontale 9 associée à des goussets 11.

Le tablier mobile 6 est légèrement incliné d'un angle $\alpha$ sur la verticale, afin d'éviter le frottement des lames 7 et 4, lorsque le jeu est minimum. Le tablier mobile 6 est maintenu en position haute par des ressorts de compression 12 disposés coaxialement à des tiges de guidage 13 pourvues d'épaulements supérieurs 14 recevant la poussée des ressorts 12. Les tiges verticales 13 sont solidaires de la plaque 9 du tablier mobile, tandis que les extrémités inférieures des ressorts 12 sont en appui sur des épaulements 15 solidarisés avec les montants fixes 1a et 1b du bâti de la cisaille.

Cette dernière est ainsi équipée, à chacune des extrémités du tablier mobile 6, d'un tel système de rappel élastique dudit tablier mobile en position haute.

Par ailleurs, la cisaille guillotine est munie d'un ensemble de vérins de serre-tôle 16, répartis sur toute la longueur de la machine et fixés sur une plaque frontale 17. Ces vérins 16 agencés de façon connue en soi, ne sont pas représentés à la figure 2. La lame mobile 7 est inclinée d'un angle $\beta$ sur l'horizontale.

Conformément à l'invention, la cisaille guillotine est équipée de plusieurs dispositifs de guidage du tablier mobile 6, qui sont montés sensiblement au niveau du plan horizontal de coupe P prévu pour recevoir la tôle à couper, tandis que d'autres dispositifs de guidage sont placés dans la partie basse de la cisaille, tous ces dispositifs de guidage coopérant avec des rampes de guidage solidaires de deux extensions ou prolongements latéraux inférieurs 18, 19 du tablier mobile 6, agencés pour recevoir et transmettre la force motrice de coupe développée par deux vérins hydrauliques 21, 22 montés sur le tablier fixe 3.

La cisaille comporte ainsi deux prolongements latéraux montés chacun à une extrémité du tablier mobile 6 avec un vérin de travail 21, 22 associé à chacun de ces prolongements latéraux. Dans la forme d'exécution représentée, les prolongements latéraux 18, 19 sont munis de parties terminales 18a-19a recourbées vers le haut en forme de crosses et sur lesquelles les vérins 21, 22 exercent leur poussée vers le bas afin d'entraîner vers le bas le tablier mobile 6.

Les prolongements 18, 19 sont constitués par des tiges de section rectangulaire, dont les faces avant et arrière sont munies de rampes faisant partie des dispositifs de guidage précités. Ceux-ci sont de trois types :
— une première paire de dispositifs 23, positionnés au niveau du plan de coupe P, sur les faces arrière des prolongements latéraux 18, 19 ;
— une seconde paire de dispositifs de guidage 24 situés sur la face avant des prolongements 18, 19 entre ceux-ci et le tablier fixe 3 ;
— et une troisième paire de dispositifs de guidage 25 montés à la partie inférieure des prolongements latéraux 18, 19.

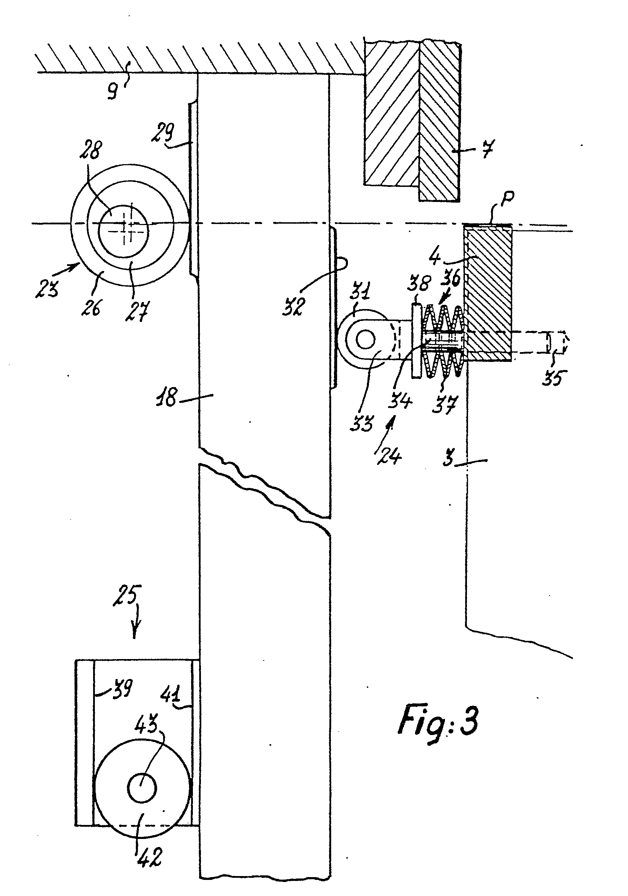

Ces dispositifs de guidage du tablier mobile 6 vont maintenant être décrits en se référant plus particulièrement à la figure 3.

Chaque dispositif de guidage 23 comprend un galet 26 situé dans le plan horizontal P de la tôle, monté librement rotatif sur un excentrique 27 muni d'un tourillon intérieur 28, qui est monté dans un alésage du montant fixe correspondant 1a ou 1b. Le galet 26 est de la sorte en contact de roulement sans jeu avec une rampe de guidage correspondante 29 ménagée sur la face arrière du prolongement latéral associé 18 ou 19, et réagit contre l'effort horizontal de coupe.

Chaque dispositif de guidage 24 est placé légèrement au-dessous du plan de coupe P, entre le tablier fixe 3 et le montant correspondant 18 ou 19, et est constitué de la manière suivante : il comprend un galet de roulement 31 placé en appui contre une rampe de guidage 32 ménagée sur le prolongement latéral associé 18 ou 19 ; ce galet 31 est porté par une chape 33 prolongée par une tige 34 montée à coulisse à l'intérieur d'un alésage 35 ménagé horizontalement dans le tablier fixe 3. Complémentairement, un système élastique 36 supporté par cette tige 34 et prenant appui contre le tablier fixe 3 exerce sur le galet 31 une poussée élastique qui le maintient constamment en appui sur la rampe 32. Dans l'exemple représenté, le système élastique 36 est constitué d'un empilement de rondelles élastiques telles que 37, comprimées entre le tablier fixe 3 et un épaulement 38 coaxial à la tige 34, par l'intermédiaire duquel est transmise au galet 31 la poussée des rondelles élastiques.

La tige 34 et le galet 31 peuvent ainsi avoir un certain débattement horizontal, du fait que la tige 34 peut s'enfoncer plus ou moins dans le trou 35.

Les dispositifs de guidage 25 situés dans la région basse de la cisaille sont constitués chacun de deux rampes verticales de guidage 39, 41 solidaires du prolongement latéral correspondant 18 ou 19, et entre lesquelles est emprisonné avec un léger jeu, un galet rotatif 42 tournant autour d'un axe 43 fixé au montant correspondant 1a ou 1b. Le léger jeu ménagé entre le galet 42 et les rampes permet au galet de rouler, soit sur la rampe 39, soit sur la rampe 41.

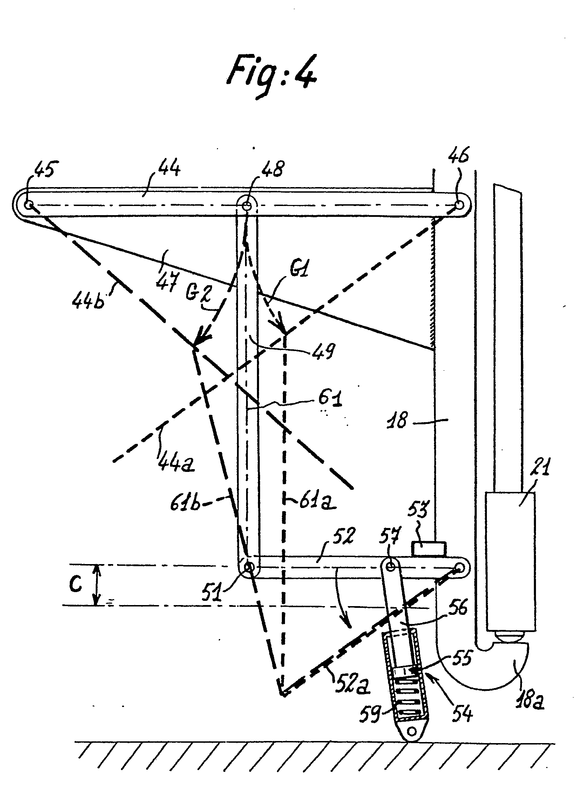

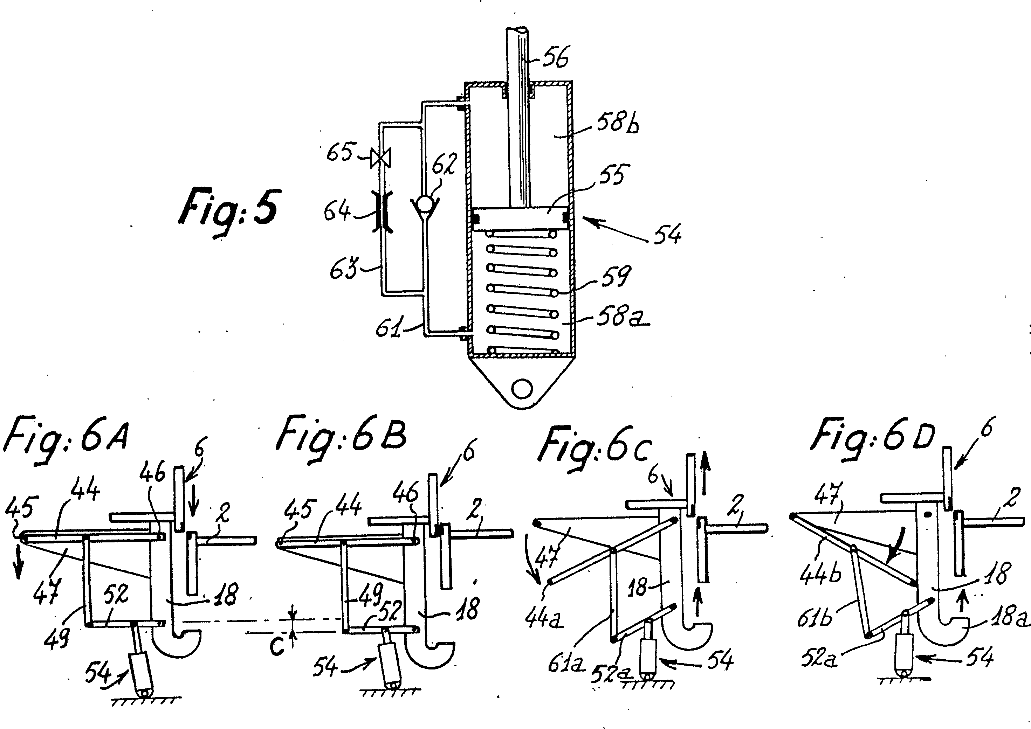

Les extensions ou prolongements latéraux 18, 19 sont, suivant une caractéristique importante de l'invention, adaptés pour supporter un dispositif de maintien de tôles fines et de grande dimension, placé à l'arrière du plan de coupe P, et qui sera maintenant décrit en référence aux figures 4 et 5.

Ce dispositif de maintien, représenté en élévation latérale à la figure 4, est réalisé de façon à s'abaisser en synchronisme avec le tablier mobile 6 pour supporter la tôle pendant sa coupe, puis à s'escamoter au moment de la remontée du tablier mobile afin de permettre l'évacuation de la tôle. Complémentairement, des moyens sont prévus pour commander automatiquement ce système de maintien exclusivement par les vérins hydrauliques 21, 22 d'entraînement du tablier mobile 6, sans apport d'énergie extérieure.

Le dispositif de maintien des tôles fines comprend ainsi une armature articulée supportant un plateau 44 de réception de la tôle, et adapté à pivoter autour de deux axes horizontaux 45, 46 parallèles, lors de la remontée du tablier mobile, de façon que le plateau 44 s'incline soit vers l'avant soit vers l'arrière, pour permettre l'évacuation de la tôle coupée, corrélativement vers l'avant ou vers l'arrière.

Ce dispositif de maintien comprend deux équerres 47 fixées chacune perpendiculairement à un prolongement latéral 18, 19 et pourvues chacune des deux axes d'articulation 45, 46 perpendiculaires au plan des équerres. Ces axes 45, 46 sont escamotables, et servent d'appui au plateau 44, lequel est muni d'un troisième axe 48 placé entre les axes précités 45, 46 et parallèlement à ces derniers.

A chaque extrémité de l'axe intermédiaire 48, s'articule une bielle 49, articulée à son tour à son extrémité inférieure 51 sur un levier 52 lui-même articulé sur le prolongement latéral associé 18 ou 19 ; le levier 52 est limité en position haute dans ses déplacements angulaires, par une butée constituée par une cale 53 solidaire du prolongement latéral correspondant 18 ou 19, de sorte que les éléments précités 44, 49, 52 ainsi que l'extension ou prolongement 18 du tablier mobile forment un parallélogramme articulé.

Chacun des deux axes 45 et 46 peut être escamoté pour permettre l'articulation du plateau 44 autour de l'axe qui n'est pas escamoté.

Le levier inférieur 52 est articulé en 57 avec des moyens d'ancrage, avec lesquels il coopère de sorte que ceux-ci retiennent l'axe 57 en position basse lorsque le tablier mobile 6 est parvenu au point mort bas de sa course, et pendant sa remontée afin de faire pivoter le parallélogramme pour évacuer la tôle.

Pour chacun des leviers 52 de l'armature articulée qui vient d'être décrite, ces moyens peuvent être constitués de la manière suivante. A titre d'exemple : un vérin 54 est ancré à l'une de ses extrémités sur le montant fixe correspondant 1a ou 1b, et il est pourvu d'un piston 55 solidaire d'une tige 56 articulée autour d'un axe 57 solidaire du levier 52.

Les deux chambres 58a, 58b (fig. 5) du vérin 54 sont remplies d'huile, la chambre inférieure 58a, contenant un organe élastique 59 constitué par un ressort de rappel qui sollicite le piston 55 et sa tige 56 en position haute. Une première canalisation 61 est branchée sur les deux chambres 58a, 58b et munie d'un clapet anti-retour 62, tandis qu'une seconde canalisation 63 pourvue d'un orifice calibré 64 et d'une électrovalve 65 est branchée sur la canalisation 61. Le clapet anti-retour 62 est orienté de façon à s'ouvrir pour laisser passer l'huile de la chambre inférieure 58a à la chambre supérieure 58b, lorsque le piston 55 descend en comprimant le ressort 59.

Dans le sens inverse, deux cas peuvent se présenter :

a) l'électrovalve 65 est fermée : le clapet anti-retour et l'électrovalve 65 empêchent tout passage de l'huile de la chambre 58b vers la chambre 58a, de sorte que le piston 55 est immobilisé ;

b) l'électrovalve 65 est ouverte, l'huile passe par l'orifice calibré 64, son débit est réduit et le piston 65 est freiné dans son mouvement de remontée, provoqué par le ressort de rappel 59 qui se détend.

Ce système remplit donc la double fonction de verrou pendant la remontée du tablier mobile 6 et d'amortisseur lors de la remontée du plateau 44.

Le fonctionnement de la cisaille guillotine et du système de maintien de tôles fines est le suivant.

Après mise sous pression des vérins hydrauliques de travail 21 et 22, ceux-ci exercent sur les parties terminales 18a, 19a des prolongements latéraux 18, 19 des poussées orientées vers le bas (symbolisées par la flèche F sur la figure 1), à l'encontre des ressorts de rappel 12. Les extensions 18, 19 descendent donc pendant la course de travail. Pendant toute la durée de la course, le tablier mobile 6 est guidé par les dispositifs 23, 24, 25 dont la hauteur est supérieure à celle du tablier mobile. Le fait que les galets 26 du dispositif 23 soient situés dans le plan horizontal P de la tôle, permet d'éviter toute déformation de l'ensemble mobile.

La grande longueur du système de guidage du haut en bas, réalisé selon l'invention, ne pourrait être obtenue avec les moyens classiques. Par ailleurs, le fait que les extensions latérales 18, 19 reçoivent l'effort fourni par les vérins hydrauliques placés au-dessous du plan de coupe P, dans une zone disponible, réduit avantageusement l'encombrement en hauteur de la cisaille.

L'ensemble du dispositif de maintien de tôle fine représenté à la figure 4 accompagne le tablier mobile sur toute la course C, en comprimant le ressort 59 du vérin 54 tandis que l'huile est chassée de la chambre 58a vers la chambre 58b. La tôle se trouve donc soutenue pendant toute l'opération de coupe.

Les figures 6A et 6B illustrent respectivement les positions du tablier mobile et de son dispositif de maintien de tôle au début et à la fin de la course de travail. Lorsque le point mort bas est atteint, l'électrovalve 65 est automatiquement fermée par un contact électrique de fin de course non représenté.

Ainsi, à partir de ce point mort bas et lorsque le tablier mobile 6 remonte, le piston 55 et la tige 56 sont bloqués en bas de course et maintiennent immobile l'axe d'articulation 57 du levier 52.

Deux cas peuvent alors se présenter (fig. 4) :

a) L'axe d'articulation 45 a été éclipsé, tandis que l'axe 46 est engagé dans son palier. Le plateau 44, articulé sur l'axe 46, s'incline vers l'arrière jusqu'à la position référencée 44a, ce basculement étant symbolisé par la flèche G1 sur la figure 4. Corrélativement, l'axe 61 de la bielle 49 prend la position référencée 61a, tandis que le levier 52 pivote vers le bas autour de son articulation sur l'extension latérale 18 ou 19, et vient prendre la position référencée 52a.

b) L'axe d'articulation 46 est éclipsé, tandis que l'axe 45 est engagé dans son palier. Le plateau 44 s'incline vers l'avant en pivotant autour de l'axe 45, jusqu'à la position référencée 44b, ce pivotement est symbolisé par la flèche G2 ; l'axe 61 prend la position 61b et l'axe du levier 52 vient également dans la position 52a.

La première des deux positions précitées du plateau 44 permet l'évacuation des tôles après la coupe par derrière la cisaille, tandis que la seconde position permet l'évacuation par l'avant.

Lorsqu'au terme de sa remontée, le tablier est arrivé au point mort haut, un autre contact de fin de course, ou tout autre système de détection non représenté, ouvre l'électrovalve 65. Le plateau 44 poussé par le ressort 59, par l'intermédiaire du levier 52 et de la bielle 49, revient en position horizontale, prêt à recevoir la tôle à couper pour le cycle suivant. Ce mouvement est amorti par l'orifice calibré 64 comme expliqué ci-dessus.

Il convient de noter que le cycle opératoire qui vient d'être décrit ne consomme aucune autre énergie que celle de la cisaille proprement dite, c'est-à-dire l'énergie développée par les vérins de travail 21 et 22, contrairement aux cisailles connues.

L'invention n'est pas limitée au mode de réalisation décrit et peut comporter de nombreuses variantes d'exécution. Ainsi, les vérins 21, 22 peuvent être prévus à double effet, ce qui permet de supprimer les ressorts de rappel 12. Par ailleurs, pour retenir puis libérer le point d'articulation ou d'ancrage du parallélogramme articulé, constitué par l'axe 57 d'articulation du levier 52, il est possible de remplacer le vérin 54 et ses canalisations annexes 61, 63 par tout autre dispositif équivalent.

Par ailleurs, il est possible de remplacer les galets tels que 26, 42, 31 des dispositifs de guidage par des patins de glissement ou de roulement, et il est évident que les galets 26 peuvent ne pas être situés rigoureusement au niveau du plan de coupe P, de même que le positionnement en hauteur des galets inférieurs 42 peut varier, sans que ces dispositifs ne sortent du cadre de l'invention.

## Revendications

1. Cisaille guillotine comprenant un tablier fixe (3) et un tablier mobile (6) portés par des montants latéraux et pourvus de lames de coupe (4, 7), dans laquelle le tablier mobile (6) est guidé à ses deux extrémités latérales par des dispositifs de guidage (23, 24, 25) coopérant avec des rampes de guidage (29, 32, 41), et ces dernières sont situées sur des prolongements latéraux inférieurs (18, 19) dudit tablier mobile (6), caractérisée en ce que les dispositifs de guidage (23, 24, 25) sont placés à partir et au-dessous du niveau du plan horizontal de coupe (P), les prolongements précités (18, 19) étant agencés pour recevoir et transmettre la force motrice de coupe développée par des vérins (21, 22) fixés sous le tablier fixe (3).

2. Cisaille guillotine suivant la revendication 1, caractérisée en ce que le guidage assuré par les dispositifs précités (23, 24, 25) s'exerce sur une longueur supérieure à la hauteur du tablier mobile (6).

3. Cisaille guillotine suivant l'une des revendications 1 et 2, caractérisée en ce que les dispositifs de guidage sont munis de galets (26) situés au niveau du plan horizontal de coupe (P) et réglables afin d'ajuster le jeu entre les lames de coupe (4, 7) en fonction de l'épaisseur à couper.

4. Cisaille guillotine suivant la revendication 3, dans laquelle certains (26) des galets, situés au niveau du plan horizontal de coupe (P), sont montés librement rotatifs sur des excentriques (27) portés par des tourillons (28) disposés dans des alésages des montants (1a, 1b), caractérisée en ce que ces galets (26) prennent appui contre des rampes (29) agencées sur les faces arrière des prolongements latéraux (18, 19) du tablier mobile (6), en ce que des dispositifs de guidage (24) du tablier mobile (6) sont placés entre les prolongements latéraux (18, 19) de celui-ci et le tablier fixe (3), légèrement au-dessous du plan horizontal de coupe (P), et en ce que ces dispositifs sont constitués chacun par un galet (31) en appui sur une rampe de guidage (32) ménagée sur le prolongement latéral (18, 19) associé, ce galet (31) étant porté par une chape (33) prolongée par une tige (34) montée à coulisse à l'intérieur du tablier fixe (3), tandis que complémentairement un système élastique (36) supporté par cette tige et prenant appui contre le tablier fixe (3) exerce sur le galet (31) une poussée élastique qui le maintient constamment en appui sur la rampe associée (32).

5. Cisaille guillotine suivant l'une des revendications 1 à 4, caractérisée en ce que les dispositifs de guidage (25) situés dans la partie inférieure de la cisaille sont formés chacun de deux rampes verticales (39, 41) solidaires du prolongement latéral correspondant (18, 19), et entre lesquelles est emprisonné avec un léger jeu un galet rotatif (42) porté par le montant associé (18, 19).

6. Cisaille guillotine suivant l'une des revendications 1 à 5, caractérisée en ce que les prolongements latéraux (18, 19) du tablier mobile (6) sont munis de parties terminales (18a, 19a) recourbées vers le haut, sur lesquelles les vérins de travail (21, 22) exercent une poussée vers le bas afin d'entraîner le tablier mobile (6).

7. Cisaille guillotine suivant la revendication 6, comprenant un dispositif de maintien des tôles fines et de grande dimension, placé à l'arrière du plan de coupe, qui comporte une armature articulée supportant un plateau (44) de réception de la tôle et adaptée à pivoter autour d'axes horizontaux (45, 46) lors de la remontée du tablier mobile (6), caractérisée en ce que des moyens sont prévus pour que le plateau (44) s'incline soit vers l'avant, soit vers l'arrière, pour permettre l'évacuation de la tôle coupée, corrélativement vers l'avant ou vers l'arrière, et en ce que ce dispositif de maintien des tôles fines est entièrement solidaire des prolongements inférieurs (18, 19) du tablier mobile (6).

8. Cisaille guillotine suivant la revendication 7, caractérisée en ce que le dispositif de maintien comporte deux équerres (47) fixées chacune perpendiculairement à un prolongement latéral (18, 19) du tablier mobile, et pourvues chacune de deux axes d'articulation horizontaux (45, 46), parallèles et escamotables qui servent d'appui au plateau (44), lequel est muni d'un troisième axe (48) placé entre les deux autres axes (45, 46) parallèlement à ceux-ci et à chaque extrémité duquel s'articule une bielle (49), articulée à son tour à son extrémité inférieure (51) sur un levier (52) lui-même articulé sur le prolongement latéral associé (18, 19), ce levier (52) étant limité en position haute dans ses déplacements angulaires par une butée (53) solidaire du prolongement latéral correspondant (18, 19), de sorte que les éléments précités, y compris le plateau (44), constituent un parallélogramme articulé.

9. Cisaille guillotine suivant la revendication 8, caractérisée en ce que le levier inférieur (52) du parallélogramme est articulé avec des moyens d'ancrage, avec lesquels il coopère de telle sorte que ceux-ci retiennent le point d'articulation (57) dudit levier sur ces moyens en position basse lorsque le tablier mobile (6) est parvenu au point mort bas de la course et pendant la remontée, afin de faire pivoter le parallélogramme pour évacuer la tôle.

10. Cisaille guillotine suivant la revendication 9, caractérisée en ce que les moyens précités comprennent, pour chacun des leviers inférieurs (52) de l'armature articulée, un vérin (54) ancré sur le montant fixe (1a, 1b) et dont la tige est articulée sur le levier (52), un organe élastique (59) placé dans l'une des deux chambres du vérin (52) remplies d'huile de façon à solliciter constamment le piston (55) et la tige (56) de celui-ci en position haute, une première canalisation (61) branchée sur les deux chambres (58a, 58b) du vérin (54) et munie d'un clapet anti-retour (62), et une seconde canalisation (63) équipée d'une électrovalve (65), mise en dérivation sur la première, ces éléments étant agencés de façon que lorsque le piston (55) se déplace vers le bas, l'huile passe de la chambre (58a) contenant l'organe élastique (59) à l'autre chambre (58b) en ouvrant le clapet anti-retour (62), tandis que la fermeture de l'électrovalve (65) bloque le piston (55) dans sa position basse lorsque le tablier mobile (6) est au point mort bas de sa course et pendant la remontée, afin de faire pivoter le plateau (44) dans une position lui permettant d'évacuer la tôle.

**Claims**

1. Guillotine shearing machine comprising a stationary apron (3) and a moving apron (6) carried by lateral upright members and provided with cutting blades (4, 7), in which the moving apron (6) is guided at its two lateral ends by guiding devices (23, 24, 25) in cooperating relation with guide ramps (29, 32, 41) and these latter are located on lower lateral extensions (18, 19) of said moving apron (6), characterized in that the guiding devices (23, 24, 25) are placed at and below the level of the horizontal cutting plane (P), the extensions aforesaid (18, 19) being so arranged as to receive and transmit the cutting power developed by jacks (21, 22) fixed beneath the stationary apron (3).

2. Guillotine shearing machine in accordance with claim 1, characterized in that the guiding action produced by the devices aforesaid (23, 24, 25) is exerted over a length exceeding the height of the moving apron (6).

3. Guillotine shearing machine in accordance with either of claims 1 and 2, characterized in that the guiding devices are fitted with rollers (26) located at the level of the horizontal cutting plane (P) and adjustable in order to adjust the clearance between the cutting blades (4, 7) as a function of the thickness to be cut.

4. Guillotine shearing machine in accordance with claim 3, in which a certain number of rollers (26) located at the level of the horizontal cutting plane (P) are mounted so as to be freely rotatable on eccentrics (27) carried by spindles (28) placed within bores of the upright members (1a, 1b), characterized in that these rollers (26) are applied against ramps (29) arranged on the rear faces of the lateral extensions (18, 19) of the moving apron (6), that devices (24) for guiding the moving apron (6) are placed between the lateral extensions (18, 19) of this latter and the stationary apron (3) at a point located slightly below the horizontal cutting plane (P), and that these devices are each constituted by a roller (31) applied against a guide ramp (32) provided on the associated lateral extension (18, 19), this roller (31) being carried by a yoke (33) extended by a rod (34) slidably mounted within the stationary apron (3) whilst, as a complementary feature, an elastic system (36) supported by this rod and applied against the stationary apron (3) exerts on the roller (31) a resilient thrust which maintains it continuously applied against the associated ramp (32).

5. Guillotine shearing machine in accordance with any one of claims 1 to 4, characterized in that the guiding devices (25) located within the bottom portion of the shearing machine are each formed by two vertical ramps (39, 41) which are rigidly fixed to the corresponding lateral extension (18, 19) and between which is imprisoned with slight play a rotary roller (42) carried by the associated upright member (18, 19).

6. Guillotine shearing machine in accordance with any one of claims 1 to 5, characterized in that the lateral extensions (18, 19) of the moving apron (6) are provided with end portions (18a, 19a) bent back in the upward direction, on which the working jacks (21, 22) exert a downward thrust in order to displace the moving apron (6).

7. Guillotine shearing machine in accordance with claim 6, comprising a device for holding thin metal sheets of large size, said device being placed to the rear of the cutting plane and constituted by an articulated frame designed to support a platform (44) for receiving the metal sheet and adapted to pivot about horizontal pins (45, 46) at the time of upward return of the moving apron (6), characterized in that means are provided for ensuring that the platform (44) is tilted either forwards or backwards in order to permit removal of the cut metal sheet correlatively in the forward or backward direction, and that this device for holding thin metal sheets is made fully integral with lower extensions (18, 19) of the moving apron (6).

8. Guillotine shearing machine according to claim 7, characterized in that the sheet-holding device comprises two corner plates (47) each attached at right angles to a lateral extension (18, 19) of the moving apron and each provided with two parallel and retractable horizontal pivot-pins (45, 46) serving as supports for the platform (44) which is provided with a third pivot-pin (48) placed between the other two pivot-pins (45, 46) in parallel relation to these latter and at each end of which is pivotally mounted a link-arm (49), the lower end (51) of which is in turn pivotally mounted on a lever (52) which is in turn pivoted on the associated lateral extension (18, 19), this lever (52) being limited in the top position in its angular displacements by a stop (53) which is rigidly fixed to the corresponding lateral extension (18, 19) so that the elements aforesaid including the platform (44) constitute an articulated parallelogram.

9. Guillotine shearing machine in accordance with claim 8, characterized in that the bottom lever (52) of the parallelogram is pivotally attached to anchoring means with which it cooperates so that these latter retain the fulcrum (57) of said lever on these means in the bottom position when the moving apron (6) has reached the bottom dead point of its travel and during the upward return travel in order to displace the parallelogram in pivotal motion for removing the metal sheet.

10. Guillotine shearing machine in accordance with claim 9, characterized in that the means aforesaid are provided in the case of each bottom lever (52) of the articulated frame with a jack (54) which is anchored to the stationary upright member (1a, 1b) and the operating rod of which is pivotally attached to the lever (52), an elastic member (59) placed within one of the two oil-filled chambers of the jack (52) in order to urge the piston (55) and the rod (56) of this latter continuously to the top position, a first pipe (61) connected to the two chambers (58a, 58b) of the jack (54) and fitted with a non-return valve (62), and a second pipe (63) equipped with an electrovalve (65) connected as a by-pass off the first pipe, these elements being so arranged that when the piston (55) undergoes a downward displacement, the oil flows from the chamber (58a) containing the elastic member (59) to the other chamber (58b) and opens the non-return valve (62) whilst closure of the electrovalve (65) locks the piston (55) in the bottom position thereof when the moving apron (6) is at the bottom dead point of its travel and during the upward return travel in order to cause pivotal displacement of the platform (44) to a position which enables it to remove the metal sheet.

**Ansprüche**

1. Schneidevorrichtung bestehend aus einem feststehenden Balken (3) und einem beweglichen Balken (6), die von seitlichen Trägern getragen sind und mit Schneidemessern (4, 7) versehen sind, wobei der bewegliche Balken (6) an seinen beiden seitlichen Enden in Führungsvorrichtungen (23, 24, 25) geführt wird, die mit Führungsrampen (29, 32, 41) zusammenwirken, wobei diese an seitlichen, unteren Verlängerungen (18, 19) des beweglichen Balkens (6) angeordnet sind, dadurch gekennzeichnet, daß die Führungsvorrichtungen (23, 24, 25) in und unter der horizontalen Schneidebene (P) liegen, wobei die Verlängerungen (18, 19) die von den unter dem feststehenden Balken (3) befestigten Hydraulikzylindern (21, 22) ausgeübte Schneidantriebskraft aufnehmen und übertragen.

2. Schneidevorrichtung nach Anspruch 1, dadurch gekennzeichnet, daß die von den Vorrichtungen (23, 24, 25) ausgeübte Führung sich über eine Länge erstreckt, die größer als die Höhe des beweglichen Balkens (6) ist.

3. Schneidevorrichtung nach den Ansprüchen 1 und 2, dadurch gekennzeichnet, daß die Führungsvorrichtungen Rollen (26) aufweisen, die in der horizontalen Schneidebene (P) liegen und so einstellbar sind, daß das Spiel zwischen den Schneidemessern (4, 7) der zu schneidenden Blechstärke angepaßt werden kann.

4. Schneidevorrichtung nach Anspruch 3, bei der einige der in der horizontalen Schneidebene (P) angeordneten Rollen (26) frei drehbar an Exzentern (27) gelagert sind, die auf Drehzapfen (28) in Bohrungen in den Trägern (1a, 1b) sitzen, dadurch gekennzeichnet, daß die Rollen (26) an den Rampen (29) anliegen, die an den Hinterseiten der seitlichen Verlängerungen (18, 19) des beweglichen Balkens (6) angeordnet sind, daß die Führungsvorrichtungen (24) des beweglichen Balkens (6) zwischen den seitlichen Verlängerungen (18, 19) und dem feststehenden Balken (3) geringfügig unter der horizontalen Schneidebene (P) liegen, daß jede dieser Vorrichtungen aus einer Rolle (31) besteht, die an einer an der entsprechenden seitlichen Verlängerung (18, 19) angebrachten Führungsrampe (32) anliegt, wobei die Rolle (31) in einem Bügel (33) gelagert ist, der sich in einer, im Inneren des feststehenden Balkens (3) beweglich gelagerten Stange (34) fortsetzt, und zusätzlich ein von dieser Stange getragenes Federelement (36) aufweist, das am feststehenden Balken (3) anliegt und auf die Rolle (31) einen Federdruck ausübt, sodaß diese ständig an der entsprechenden Rampe (32) anliegt.

5. Schneidevorrichtung nach den Ansprüchen 1 bis 4, dadurch gekennzeichnet, daß die im unteren Teil der Schneidevorrichtung angebrachten Führungsvorrichtungen (25) von zwei vertikalen Rampen (39, 41) gebildet werden, die mit den entsprechenden seitlichen Verlängerungen (18, 19) fest verbunden sind und zwischen denen mit leichtem Spiel eine von den entsprechenden Verlängerungen (18, 19) getragene, freilaufende Rolle (42) angeordnet ist.

6. Schneidevorrichtung nach den Ansprüchen 1 bis 5, dadurch gekennzeichnet, daß die seitlichen Verlängerungen (18, 19) des beweglichen Balkens (6) nach oben gekrümmte Endstücke (18a, 19a) aufweisen, auf die die Hydraulikzylinder (21, 22) einen Druck nach unten zur Betätigung des beweglichen Balkens (6) ausüben.

7. Schneidevorrichtung nach Anspruch 6, bestehend aus einer Haltevorrichtung für dünne und großdimensionierte Bleche, die hinter der Schneidebene angeordnet ist und eine gelenkige Halterung für einen Tisch (44) zur Aufnahme des Bleches aufweist, die bei Aufwärtsbewegung des beweglichen Balkens (6) um horizontale Achsen (45, 46) drehbar ist, dadurch gekennzeichnet, daß Vorrichtungen zur Neigung des Tisches (44) sowohl nach vorne als auch nach hinten vorgesehen sind, die die Entnahme des geschnittenen Bleches in beiden genannten Richtungen erlauben, und daß diese Haltevorrichtung für dünne Bleche mit den unteren Verlängerungen (18, 19) des beweglichen Balkens (6) fest verbunden ist.

8. Schneidevorrichtung nach Anspruch 7, dadurch gekennzeichnet, daß die Haltevorrichtung zwei Winkelstützen (47) aufweist, die jeweils im rechten Winkel an einer seitlichen Verlängerung (18, 19) des beweglichen Balkens befestigt sind und zwei parallele, versenkbare, horizontale Gelenkachsen (45, 46) haben, die den Tisch (44) tragen, der mit einer dritten parallelen Achse (48) zwischen den beiden Achsen (45, 46) versehen ist, mit deren beiden Enden eine Führungsstange (49) gelenkig verbunden ist, die an ihrem unteren Ende (51) ihrerseits mit einem Hebel (52) gelenkig verbunden ist, der an der entsprechenden seitlichen Verlängerung (18, 19) ebenfalls gelenkig angebracht ist, wobei ein an der entsprechenden seitlichen Verlängerung (18, 19) angebrachter Anschlag (53) die Winkelbewegungen des Hebels (52) nach oben beschränkt, sodaß zusammen mit dem Tisch (44) ein gelenkiges Parallelogramm entsteht.

9. Schneidevorrichtung nach Anspruch 8, dadurch gekennzeichnet, daß der untere Hebel (52) des Parallelogramms mit einer Verankerung gelenkig verbunden ist und mit dieser so zusammenwirkt, daß diese die Gelenkachse (57) des genannten Hebels in ihrer unteren Stellung hält, wenn der bewegliche Balken (6) seinen unteren Totpunkt erreicht hat und wieder nach oben bewegt wird, wodurch das Parallelogramm zur Entnahme des Bleches gekippt wird.

10. Schneidevorrichtung nach Anspruch 9, dadurch gekennzeichnet, daß die genannte Verankerung für jeden unteren Hebel (52) eine gelenkige Halterung und einen an dem feststehenden Träger (1a, 1b) angebrachten Hydraulikzylinder (54) aufweist, dessen Zylinderstange mit dem Hebel (52) gelenkig verbunden ist, weiters ein Federelement (59) in einer der beiden mit Öl gefüllten Kammern des Hydraulikzylinders (52), sodaß der Kolben (55) und die Kolbenstange (56) ständig nach oben gedrückt werden, weiters eine erste Hydraulikleitung (61), die mit den beiden Kammern (58a, 58b) des Hydraulikzylinders (54) verbunden und mit einem Rückschlagventil (62) versehen ist, und eine zweite Hydraulikleitung (63) mit einem Elektroventil (65) in Zusammenwirkung mit der ersten Hydraulikleitung, sodaß bei einer Abwärtsbewegung des Kolbens (55) das Öl aus der Kammer (58a) mit dem Federelement (59) in die andere Kammer (58b) fließt, wobei das Rückschlagventil (62) geöffnet wird, während das Schließen des Elektroventils (65) den Kolben (55) in seiner unteren Stellung festhält, wenn der bewegliche Balken (6) seinen unteren Totpunkt erreicht und nach oben bewegt wird, sodaß der Tisch (44) in eine Lage gekippt wird, die das Blech freigibt.

Fig.2

Fig.1

Fig:3

## Fig: 4

Fig. 5

Fig. 6A   Fig. 6B   Fig. 6c   Fig. 6D